# EUROPÄISCHE PATENTANMELDUNG

(11) **EP 4 667 994 A2**
(43) Veröffentlichungstag der Anmeldung: **24.12.2025**
(21) Anmeldenummer: 25184132.6
(22) Anmeldetag: 20.06.2025
(51) Int. Cl.: G02B 7/02, G02B 7/12, H04N 23/51, H04N 23/55

(54) **KAMERA**

(30) Priorität: 21.06.2024 DE 102024117602; 10.09.2024 DE 102024125976
(71) Anmelder: Proton Camera Innovations GmbH, 30827 Garbsen (DE)
(72) Erfinder: Höpken, Marko, 31535 Neustadt am Rübenberge (DE)
(74) Vertreter: Gerstein, Hans Joachim

(57) **Zusammenfassung**

Eine Kamera (1) mit einem Kameragehäuse (4) und einem mit dem Kameragehäuse (4) verschraubbaren Objektiv (2) wird beschrieben. Das Objektiv (2) weist ein zylinderförmiges Objektivgehäuse (6) mit einem Objektivanschluss (7) zur Verschraubung mit dem Kameragehäuse (4) und eine Frontlinse (9) in dem Objektivgehäuse (6) auf.

Der Objektivanschluss (7) hat eine dem Kameragehäuse (4) zugewandte, umlaufende Flanschfläche (8) und eine auf dem Objektivanschluss (7) zwischen Kameragehäuse (4) und Flanschfläche (8) angeordnete Ringdichtung (3), wobei die Ringdichtung (3) in einem einstellbaren Fokusbereich der Kamera (1) elastisch verformbar ist und bei mit der Kamera (1) verschraubtem Objektiv (2) im Fokusbereich komprimiert ist. Die Frontlinse (9) hat eine dem Objektivanschluss (7) zugewandte plane Oberfläche und ist dicht mit dem Objektivgehäuse (6) verbunden.

## Beschreibung

Die Erfindung betrifft eine Kamera mit einem Kameragehäuse und einem mit dem Kameragehäuse verschraubbaren Objektiv, wobei das Objektiv ein zylinderförmiges Objektivgehäuse mit einem Objektivanschluss zur Verschraubung mit dem Kameragehäuse und eine Frontlinse in dem Objektivgehäuse aufweist.

Kameras werden oftmals in Umgebungsbedingungen eingesetzt, die einen wasserdichten oder zumindest spritzwassergeschützten Einbau des Objektivs an das Kameragehäuse erfordert. Hierzu kann das Objektiv von einem Schutzgehäuse umgeben sein, das durch ein Frontglas abgedeckt ist. Für den Objektivwechsel muss das Schutzgehäuse mit dem Frontglas demontiert oder zumindest angepasst werden. Zudem erhöht das Schutzgehäuse das Gewicht und die Größe der Kamera: das Frontglas schränkt dem Blickwinkel der Kamera ein und kann zu Abschattungen und Reflexionen im aufgenommenen Bild führen. Bei Temperaturwechsel kann das Frontglas nachteilig beschlagen.

Weiterhin sind für den wasserdichten Einbau Kameras mit in das Kameragehäuse eingeklebte Linse bekannt. Dies führt zwar zu sehr kleinen Bauformen, hat aber den Nachteil, dass die Linse nicht auswechselbar ist. Zudem lässt sich der Fokus nicht justieren.

Eine solche Lösung ist beispielsweise aus DE 10 2015 010 443 A1 bekannt, die ein modulares Fahrzeug-Kamerasystem mit einer Kamera, einer auf eine bestimmte Einbauposition in dem Fahrzeug ausgelegten Optik und Mitteln zur Befestigung eines modularen optisch wirksamen Elements in dem Weg des gesamten einfallenden Lichts vor der Optik im Bereich der Kamera bzw. des Kameragehäuses aufweist. Das modulare optische Element kann mit dem Kameragehäuse verklebt werden. Dieses Verkleben des Linsenzylinders mit dem Kameragehäuse kann dabei insbesondere bei der Herstellung der Kamera so erfolgen, dass die Linse exakt ausgerichtet wird und anschließend die Verklebung erfolgt.

DE 21 2021 000 493 U1 offenbart eine Objektiv-Einheit, umfassend eine Linse, einen Objektivtubus, in dem die Linse aufgenommen ist, eine Gehäusenut, die in dem Objektivtubus ausgebildet ist und in die ein Klebstoff zum Verbinden der Linse und des Objektivtubus aufgenommen ist; und ein Lüftungsloch zum Ableiten von Luft, wobei das Lüftungsloch in der Gehäusenut ausgebildet ist. Damit soll die Bildung von Hohlräumen an einer Klebegrenzfläche und in einer Klebeschicht verhindert werden.

DE 10 2021 210 306 A1 beschreibt eine Kamera, bei der eine Dichtung in einen Ringspalt zwischen dem Objektiv und dem Gehäuse eingesetzt ist, so dass das Gehäuse nach außen hin abgedichtet ist.

DE 10 2010 012 314 A1 schlägt vor, eine Klebeverbindung zwischen einem optischen Modul und einem Trägergehäuse, in dem das optische Modul gelagert ist, zu realisieren, wobei ein definierter Klebespalt und eine eindeutige Ausrichtung bereits über die Formgebung des optischen Moduls und des Trägergehäuses gegeben ist.

In der DE 10 2010 047 106 A1 wird eine optische Vorrichtung offenbart, die ein Objektiv und ein Trägergehäuse umfasst, wobei das Objektiv in dem Trägergehäuse gelagert und über eine Klebeverbindung mit dem Trägergehäuse verbunden ist. Zwischen dem Objektiv und dem Trägergehäuse ist ein zusätzliches Justageelement angeordnet, welches eine Dichtwirkung, Gelenkwirkung und Vorfixierung ermöglicht.

Bei dem vorgeschlagenen Imagermodul wird die üblicherweise vorgesehene Klebeverbindung zwischen dem Objektiv und dem Objektivhalter bzw. dem Halteelement durch eine Schweißverbindung ersetzt. Im Unterschied zu Klebeverbindung soll mit Hilfe der Schweißverbindung eine stabile Fokuslage auch unter Temperatur und/oder Feuchteeinwirkung erzielt werden. Vor dem Verschweißen kann das Objektiv in Bezug auf den Bildsensor ausgerichtet und anschließend durch Setzen der Schweißnaht fixiert werden. Dabei werden lediglich punktuell Schweißnähte gesetzt, so dass der Wärmeeintrag beim Verschweißen minimal ist.

Ausgehend hiervon ist es Aufgabe der Erfindung, eine verbesserte Kamera zu schaffen, die ohne nachteilige Beeinflussung des optischen Pfades kompakt und abgedichtet vor Umwelteinflüssen ausgeführt werden kann und deren Fokus bei der Montage und zur nachträglichen Anpassung auf zuverlässige und einfache Weise einstellbar ist und auch im Betrieb fest eingestellt bleibt.

Die Aufgabe wird durch die Kamera mit den Merkmalen des Anspruchs 1 gelöst. Vorteilhafte Ausführungsformen sind in den Unteransprüchen beschrieben.

Es wird vorgeschlagen, dass der Objektivanschluss eine dem Kameragehäuse zugewandte, umlaufende Flanschfläche und eine auf dem Objektivanschluss zwischen Kameragehäuse und Flanschfläche angeordnete Ringdichtung hat, wobei die Ringdichtung in einem einstellbaren Fokusbereich der Kamera elastisch verformbar ist und bei mit der Kamera verschraubtem Objektiv im Fokusbereich komprimiert ist, und dass die Frontlinse eine dem Objektivanschluss zugewandte plane Oberfläche hat und dicht mit dem Objektivgehäuse verbunden ist.

Die Ringdichtung kann eine im Querschnitt rechteckige, runde oder ovale Form haben. Die rechteckige Form hat den Vorteil einer beidseits größeren planen Dichtfläche. Die runde Form in der Gestalt eines O-Rings hat hingegen zwar eine geringere Dichtfläche, ist aber bei gleichem Material in einer größeren Variation der Dicke elastisch verformbar und dabei zuverlässiger abdichtend als ein rechteckiger Querschnitt. Mit einem ovalen Querschnitt wird ein Kompromiss zwischen den Vor- und Nachteilen von rechteckigen und runden Querschnitten erreicht.

Die Ringdichtung kann eine Gummidichtung sein. Gummidichtungen weisen ein sehr kleines Elastizitätsmodul im Bereich von 0,01 bis 0,1 GPa = 10*10⁶ bis 100*10⁶ N/m² auf. Denkbar sind aber auch Silikondichtungen oder andere geeignete elastische und wasserdicht abdichtende Materialien. Sie sind damit zu einem großen Anteil der Dicke der Ringdichtung zusammenpressbar und als Flanschdichtung geeignet, die zur Fokuseinstellung des Objektivs einen variablen Abstand zwischen Flanschfläche des Objektivgehäuses und korrespondierender Flanschfläche des Kameragehäuses erlaubt.

Der umlaufende Randbereich der Frontlinse kann vorteilhaft wasserdicht mit dem Objektivgehäuse verklebt sein. Hierfür kann der Randbereich an der planen Lichtdurchtrittsfläche und/oder der radial äußere Stirnkantenbereich der Frontlinse genutzt werden.

Der Objektivanschluss des Objektivgehäuses kann einen zylinderförmigen Schraubanschluss mit einem Außengewinde und einen sich an den Schraubanschluss anschließenden Flansch haben, wobei das Außengewinde einen ersten Durchmesser und der Flansch einen zweiten Außendurchmesser hat, der größer als der erste Durchmesser ist. Das Objektivgehäuse kann damit in eine Objektivaufnahmeöffnung eingeschraubt werden, wobei die Objektivaufnahmeöffnung als eine mit einem Innengewinde versehenen kreisrunden Ausnehmung in der Front des Kameragehäuses ausgebildet ist. Die Objektivaufnahmeöffnung kann dabei durch eine plane umlaufende Flanschfläche umgeben sein, welche als Auflage-Dichtfläche für die Ringdichtung dient.

Denkbar ist aber auch eine Verschraubung des Objektivs an der Kamera mit einem Bajonettanschluss. Hierzu kann der Objektivanschluss des Objektivgehäuses einen Flansch mit einem Bajonettanschluss zur Verschraubung des Objektivs mit der Kamera über einen Bajonettverschluss haben, wobei die Ringdichtung radial innenliegend zum Bajonettanschluss oder radial außenliegend zum Bajonettanschluss an dem Objektivanschluss angeordnet ist.

Das Objektivgehäuse kann eine ringförmig umlaufende plane Auflagefläche zur Auflage der planen Oberfläche der Frontlinse haben. Alternativ oder zusätzlich hierzu kann das Objektivgehäuse eine die Frontlinse am Außenumfang umfassende Umfangsseitenwand, d. h. einen Kragen, haben. Damit kann die Frontlinse an den planen Auflagefläche und/oder zwischen der Stirnseite der Frontlinse und der Innenwandfläche der Umfangsseitenwand umlaufend wasserdicht verklebt sein. Durch die Umfangsseitenwand kann die Frontlinse bei der Montage formschlüssig in seine Endposition geführt werden. Die Umfangsseitenwand hält die Frontlinse im Betrieb formschlüssig und schützt diese vor mechanischer Einwirkung von außen.

Die umlaufende Flanschfläche kann durch einen Adapterring ausgebildet sein, der an dem Objektivgehäuse angeordnet ist. Damit kann ein Dickenausgleich bereitgestellt werden, für den Fall, dass ein größerer Abstand zwischen Kameragehäuse und Anlagefläche am Objektivgehäuse zur Fokuseinstellung erforderlich ist, der durch die Elastizität der Ringdichtung nicht mehr erreicht werden kann. Der Adapterring kann dabei als weitere

Ringdichtung oder bevorzugt als starre, nicht-elastische Ausgleichsscheibe ausgebildet sein, welche die Flanschfläche zur Anlage der Ringdichtung bereitstellt und sich am Objektivgehäuse abstützt.

Der Adapterring kann wasserdicht mit dem Objektivgehäuse verbunden, beispielsweise verklebt oder verschweißt sein. Damit kann für ein Objektivgehäuse, das selbst keine passende oder ausreichend plane Flanschfläche hat, eine Dichtfläche zur dichten Anlage der Ringdichtung bereitgestellt werden.

Die Ringdichtung kann kraftschlüssig und/oder formschlüssig mit dem Objektivgehäuse verbunden sein. Damit wird bei Austausch des Objektivs sichergestellt, dass die zum Objektiv passende Ringdichtung an dem Objektiv verbleibt bzw. ein Objektiv mit passender Ringdichtung für ein Set aus Kamera und verschiedenen Objektiven bereitstellt wird.

Bei einem Elektronikgerät, vorzugsweise bei der oben beschriebenen Kamera, mit einem Gerätegehäuse, das ein Gehäuse-Unterteil und ein Gehäuse-Oberteil und eine Elektronikleiterplatte in dem Gehäuse-Unterteil aufweist, wobei das Gehäuse-Oberteil aus das Gehäuse-Unterteil aufsetzbar und mit dem Gehäuse-Unterteil miteinander verbindbar ist, das Gehäuse-Unterteil einen zur Elektronikleiterplatte hin führenden Kabeleinführungskanal mit einem Anschlusskabel hat, und das Anschlusskabel in den Kabeleinführungskanal eingeführt und mit der Elektronikleiterplatte elektrisch leitend verbunden ist, kann eine Hülse auf den Umfang des abisolierten Endbereichs des Kabels aufgecrimpt sein. Im verbundenen Zustand von Gehäuse-Oberteil und Gehäuse-Unterteil mündet der Kabeleinführungskanal mit einem Ausmündungsabschnitt zu einer dem Gehäuse-Unterteil zugewandten Innenwand des Gehäuse-Oberteils hin aus und schließt sich an den Ausmündungsabschnitt ein Klemmzwischenraum an, in dem die Hülse mit einander zugewandten Klemmflächen des Gehäuse-Oberteils und Gehäuse-Unterteils eingeklemmt ist.

Damit gelingt ein Einführen eines Kabels in das Elektronikgehäuse mit Zugsicherung und möglichst dichter Anlage an dem Kabeleinführungskanal, insbesondere bei sehr kleinen Gehäusen und manueller Montage, wobei eine möglichst geringe Zahl an herzustellenden und zu montierenden Einzelteilen erreicht wird.

Das Anschlusskabel wird dabei nicht einfach nur am Isolierstoffmantel festgeklemmt, um eine Zugentlastung zu bilden. Vielmehr erfolgt die Befestigung des Kabels durch Einklemmen einer auf das Anschlusskabel aufgecrimpten Hülse und damit über den

Umfang des Kabels. Das Einklemmen erfolgt über die aufeinanderzuweisenden Klemmflächen des Gehäuse-Unterteils und Gehäuse-Oberteils, indem das Gehäuse-Oberteil auf das Gehäuse-Unterteil aufgesetzt und mit dem Gehäuse-Unterteil bspw. durch Schrauben oder Rastelemente verbunden ist.

Bei Verwendung einer Metallhülse kann gleichzeitig auch eine Befestigung der Metallhülse an der Elektronikplatine erfolgen, wobei damit auch ein elektrischer Anschluss des Kabels über die Metallhülse möglich wird. Die Metallhülse kann dabei mit der Elektronikleiterplatte verlötet oder durch eine Klemmkontaktverbindung, wie einen Federkraftklemmkontakt oder Schraubklemmkontakt, verbunden sein. Die Metallhülse kann optional mit dem Außenleiter verlötet werden. Damit kann insbesondere bei dünnen Litzen des Außenleiters ein verbesserter Kontakt und mechanischer Halt erreicht werden.

Der Kabeleinführungskanal kann sich von einer Außenseite des Gehäuse-Unterteils zu der dem Gehäuse-Unterteil zugewandten Innenwand des Gehäuse-Oberteils hin erstrecken. Dabei kann der Ausmündungsabschnitt vorzugsweise die gesamte Länge des Kabeleinführungskanals bilden. Dies ermöglicht ein schnelles und einfaches Einführen des Kabels zur Endmontage des Elektronikgerätes.

Denkbar ist in einer anderen Variante, dass der Kabeleinführungskanal ausgehend von der Außenseite mindestens eine Biegung hat und an seinem Endbereich mit dem zur Klemmfläche des Gehäuse-Oberteils ausmündenden Ausmündungsabschnitt ausläuft. Damit kann das Anschlusskabel durch die mindestens eine weitere Biegung noch zugfester im Gehäuse-Unterteil aufgenommen werden.

Der Kabeleinführungskanal kann eine Bohrung sein. Diese Bohrung ist bevorzugt eine Passbohrung für das Kabel, welches damit in einer Presspassung zugfest und vor Umwelteinflüssen dicht in dem Gehäuse-Unterteil aufgenommen werden kann. Auf diese Weise lässt sich ein zumindest staubdichter Einbau des Kabels und bevorzugt ein feuchtigkeitsdichter oder sogar wasserdichter Einbau des Kabels erreichen.

Die Klemmfläche des Gehäuse-Unterteils kann eine Ebene aufspannen, die quer zur Längserstreckungsrichtung des Ausmündungsabschnitts ausgerichtet ist. Damit wird eine Umbiegung des in den Kabeleinführungskanal eingeführten Kabels erzwungen und das Anschlusskabel damit zugfest am Gerätegehäuse befestigt.

Der Kabeleinführungskanal und die Klemmfläche des Gehäuse-Unterteils können an eine Seitenwand des Gehäuse-Unterteils angrenzen. Die Seitenwand bildet damit zusammen mit der Klemmfläche eine Führungs- und Haltefläche für das Kabel, um dieses formschlüssig zugfest am Gerätegehäuse zu fixieren.

Die Elektronikleiterplatte kann eine benachbart zur Klemmfläche des Geräte-Unterteils angeordnete Lötfläche haben. Die Metallhülse kann auf die Lötfläche aufgelötet sein bzw. bei der Endmontage nach Einführen des Kabels mitsamt der vorzugsweise bereits aufgecrimpten Metallhülse auf die Lötfläche aufgelötet werden. Damit wird das Anschlusskabel und die daran angecrimpte Metallhülse benachbart zur Klemmfläche elektrisch leitend mit der Elektronikleiterplatte verbunden. Dies verkürzt die Leitungswege und verringert den zur Aufnahme des Kabels erforderlichen Platzbedarf.

Das Anschlusskabel kann einen mit der Metallhülse elektrisch leitend vercrimpten Außenleiter und einen Innenleiter aufweisen, wobei die Elektronikleiterplatte ein Anschlusselement zum elektrisch leitenden Anschluss eines Innenleiters hat.

Das Anschlusselement kann ein Lötanschluss oder ein Steckkontaktanschluss sein.

Das Anschlusskabel kann mehrere Innenleiter haben, die jeweils mit einem Anschlusselement der Elektronikleiterplatte verbunden sind.

Das Anschlusskabel kann ein Koaxialkabel mit einem Schirmgewebe als Außenleiter und einem koaxialen Innenleiter sein.

Das Elektronikgerät kann eine Kamera mit einem mit der Elektronikleiterplatte verbundenen Bildsensor und mit einem Objektivträger an dem Gehäuse-Oberteil sein.

Das Verfahren zur Montage des oben beschriebenen Elektronikgerätes hat die Schritte:
a) Einführen des Kabels in den Kabeleinführungskanal;
b) Anschließen des Kabels mit der Elektronikleiterplatte, umfassend ein Auflöten des auf den Endbereich des Anschlusskabel aufgecrimpten Metallhülse auf eine Lötfläche der Elektronikleiterplatte;
c) Aufsetzen des Gehäuse-Oberteils auf das Gehäuse-Unterteil, in welches die Elektronikleiterplatte eingebaut und das daran angeschlossene Anschlusskabel eingeführt ist; und
d) Verschließen des Gehäuses durch Einpressen der zwischen den einander gegenüberliegenden Klemmflächen des Gehäuses liegenden Metallhülse.

Damit kann eine einfache und schnelle Montage von sehr kompakten Elektronikgeräten mit wenigen Einzelteilen erreicht werden, um einen zugsicheren Einbau eines aus dem Gerätegehäuse herausgeführten Kabels zu erreichen. Die Gestaltung des Gerätegehäuses und des Kabels erlaubt eine Verkürzung der Montagezeit bei einem sehr kleinen notwendigen Bauraum.

Die Hülse erzeugt einen Kraftschluss mit dem Anschlusskabel durch crimpen und ggf. unterstützt durch ein optionales Verlöten mit dem Aussenleiter und/oder ein optionales zusätzliches Verlöten auf der Elektronikleiterplatte.

Wenn die Hülse kleiner als der Durchmesser des Kabeleinführungskanals dimensioniert ist, lässt sich das Anschlusskabel mit bereits vorher angecrimpter Hülse durch den Kabeleinführungskanal stecken. Dies bietet sich vor allem für kleine Bohrungen in Miniaturkameras an.

Durch die Nutzung einer Metallhülse, die auf einen Außenleiter des Kabels aufgecrimpt und zudem mit den Kontaktflächen im Gerätegehäuse eingepresst wird, kann mit Verlötung der Metallhülse auf der Elektronikleiterplatte ein guter Kontakt der Schirmung erreicht werden. Zudem wird die Position des Kabels durch das Verlöten an der Elektronikleiterplatte fixiert, was zu einem vereinfachten weiteren Handling bei der Montage führt.

Die Erfindung wird nachfolgend anhand von Ausführungsbeispielen mit den beigefügten Zeichnungen näher erläutert. Es zeigen:
- Fig. 1 -: perspektivische Ansicht einer Kamera mit Objektiv und Ringdichtung;
- Fig. 2 -: Querschnittsansicht durch die Objektivaufnahme der Kamera und dem damit dicht verschraubtem Objektiv;
- Fig. 3 -: perspektivische Ansicht einer Kamera mit Objektiv und zusätzlichem Adapterring als Flanschfläche;
- Fig. 4 -: Querschnittsansicht durch die Objektivaufnahme der Kamera und dem damit dicht verschraubtem Objektiv;
- Fig. 5 -: Ausschnitt eines Kameragehäuses in Seiten-Schnittansicht mit eingebautem Kabel;
- Fig. 6 -: Ausschnittansicht der Innenseite eines Gehäuse-Unterteils;
- Fig. 7 -: Ausschnittansicht der Innenseite eines Gehäuse-Oberteils;
- Fig. 8 -: perspektivische Ansicht eines Kabels mit aufgecrimpter Metallhülse;
- Fig. 9 -: Ausschnittansicht der Innenseite eines Gehäuse-Unterteils aus Figur 2 mit eingebautem Kabel.

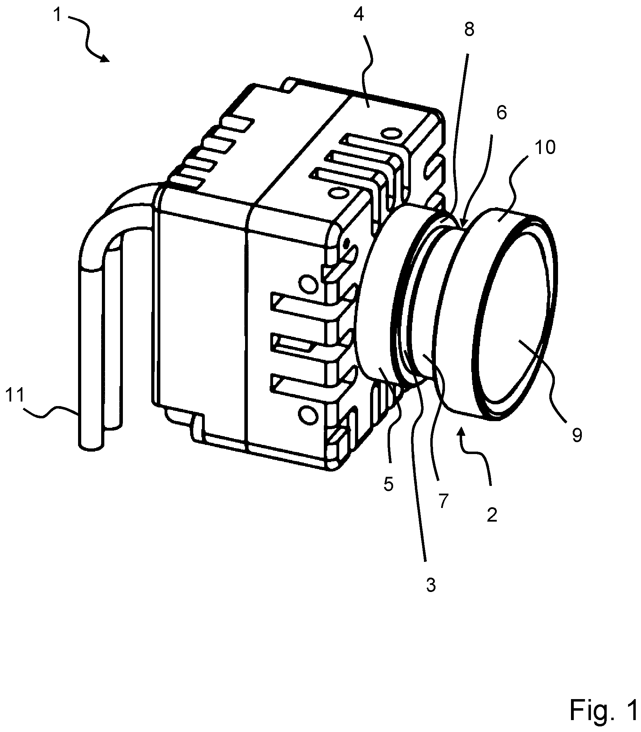

Figur 1 zeigt eine perspektivische Ansicht einer Kamera 1 mit einem Objektiv 2 und einer Ringdichtung 3 zwischen der Kamera 1 und dem Objektiv 2.

Die Kamera 1 hat ein Kameragehäuse 4, das beispielsweise zweiteilig mit einem Grundgehäuseteil und einem Frontgehäuseteil (Deckelteil) ausgeführt sein kann und an seiner Frontfläche eine Objektivaufnahmeöffnung 5 mit einem Innengewinde hat. Das Objektiv 2 hat ein Objektivgehäuse 6 mit einem zylinderförmigen Objektivanschluss 7, der von der Ringdichtung 3 umfangsseitig umgeben ist und mit einem Außengewinde in das Innengewinde der Objektivaufnahmeöffnung 5 eingeschraubt ist. Der Objektivanschluss 7 kann auch als Objektivaufnahme bezeichnet werden.

Die Objektivaufnahmeöffnung 5 ist als eine mit einem Innengewinde versehene kreisrunde Ausnehmung in der Front des Kameragehäuses 4 ausgebildet. Die Objektivaufnahmeöffnung 5 ist durch eine plane umlaufende Flanschfläche 8 umgeben, welche als Auflage-Dichtfläche für die Ringdichtung 3 dient.

In der Fronseite des Objektivgehäuses 6 ist eine Frontlinse 9 eingebaut, die von einer seitlich umlaufenden Umfangsseitenwand 10, d. h. einer Kragenwand, umgeben ist. Die Frontlinse 9 ist wasserdicht mit dem Objektivgehäuse verbunden. Hierzu kann die Frontlinse 9 mit einer planen Auflagefläche an einer entsprechend planen Auflagefläche des Objektivgehäuses 6 und/oder mit seiner Umfangsstirnseite an der Innenseite der Umfangsseitenwand 10 umfangsseitig umlaufend verklebt sein.

Aus dem Gehäuse 4 kann eine elektrische Leitung 11 herausgeführt sein, die zur elektrischen Energieversorgung und/oder als Datenleitung zur Übertragung der digitalen Bilddaten und ggf. von Steuerdaten genutzt werden kann. Diese elektrische Leitung 11 kann beispielsweise mit einer Gummidichtung wasserdicht aus dem Kameragehäuse 4 herausgeführt sein. Andere Lösungen sind gleichermaßen denkbar.

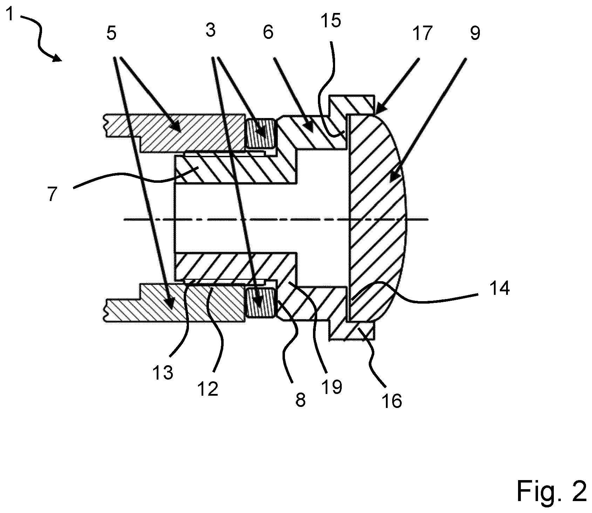

Figur 2 zeigt eine Querschnittsansicht durch die Objektivaufnahmeöffnung 5 der Kamera 1 und dem damit dicht verschraubtem Objektiv 2.

Es ist erkennbar, dass das Objektivgehäuse einen Objektivanschluss 7 mit einem ersten Durchmesser hat, der kleiner als der zweite Außendurchmesser als der vom zylinderförmigen Objektivanschluss 7 abragenden Flansches 19 ist. Der Flansch 19 stellt an seiner dem auslaufenden Ende des Objektivanschlusses 7 zugewandten Seite eine Flanschfläche 8 bereit, an der die Ringdichtung 3 anliegt.

Die Ringdichtung 3 ist zwischen einer Stirnwand des Kameragehäuses 4, die an die Objektivaufnahmeöffnung 5 angrenzt, und der Flanschfläche 8 eingespannt, wenn das Objektivgehäuse 6 in das Kameragehäuse 4 so weit eingeschraubt ist, dass der erforderliche Fokus eingestellt ist. Die elastisch verformbare Ringdichtung 3 wird im einstellbaren Fokusbereich zusammengedrückt und dichtet die Objektivaufnahmeöffnung 5 damit wasserdicht ab.

Die Objektivaufnahmeöffnung 5 ist zylinderförmig und hat ein Innengewinde 12 an seiner inneren Umfangswand. Die ebenso zylinderförmige Objektivanschluss 7 hat ein dazu passendes Außengewinde 13 an seiner äußeren Umfangswand. Damit kann der Objektivanschluss 7 in der Objektivaufnahmeöffnung 5 eingeschraubt werden. Die Schraubverbindung wird mit Hilfe der Ringdichtung 3 wasserdicht abgedichtet. Zudem wird das Objektiv 2 durch die elastische Vorspannung der Ringdichtung 3 mechanisch fest gehalten. Ein Lockern des Objektivs 2 aufgrund von Vibrationen kann damit sicher verhindert werden.

Die Frontlinse 9 hat eine plane Innenseite, die mit einem planen umlaufenden Randbereich 14 auf einer ebenso planen Auflagefläche 15 aufliegt. Diese plane Auflage kann verklebt sein, um die Frontlinse 9 wasserdicht und mechanisch fest an dem Objektivgehäuse 6 zu befestigen. Die Frontlinse 9 ist von einer umlaufenden Kragenwand 16 umgeben und damit mechanisch geschützt und bei der Montage in die gewünschte optisch zentrierte Lage geführt.

Die Frontlinse 9 kann zwischen ihrer umlaufenden, radial äußeren Stirnwand und der Kragenwand 16 mit einer Verklebung 17 wasserdicht und mechanisch fest an dem Objektivgehäuse 6 verbunden sein.

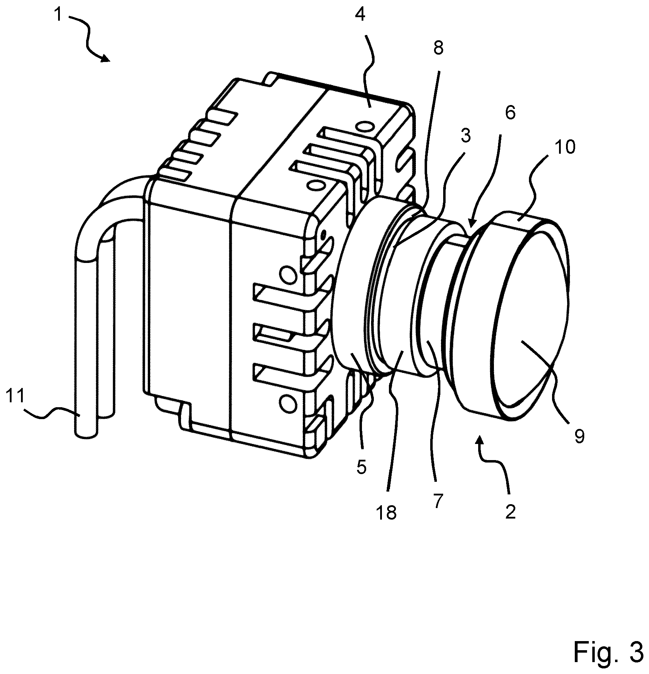

Figur 3 zeigt eine perspektivische Ansicht einer Kamera 1 mit einem eingeschraubten Objektiv 2 und einem zusätzlichen Adapterring 18 als Flanschfläche 8.

Mit diesem zwischen dem Objektivanschluss 7 und der Ringdichtung 3 angeordneten Adapterring 18 kann der Abstand zwischen einem im Innenraum des Kameragehäuses 4 eingebauten Bildsensors und der Frontlinse 9 vergrößert werden. Dies kann zur Erweiterung des einstellbaren Fokusbereiches vorteilhaft sein.

Der Adapterring 18 stellt an seiner dem Kameragehäuse 4 im eingeschraubten Zustand zugewandten Stirnseite eine Flanschfläche 8 bereit.

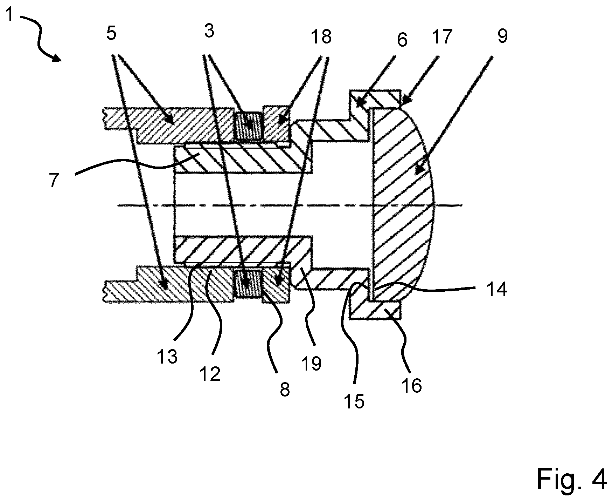

Figur 4 zeigt eine Querschnittsansicht durch den Objektivanschluss 7 der Kamera 1 und dem damit dicht verschraubtem Objektiv 2.

Es ist im Vergleich zur Figur 2 erkennbar, dass die Ringdichtung 3 nicht an dem Flansch 19 anliegt, der einstückig von dem Objektivanschluss 7 abragt. Der Außendurchmesser dieses Flansches 19 ist kleiner als der Außendurchmesser der Ringdichtung 3 und damit zur direkten Auflage der Ringdichtung 3 nicht optimal geeignet. Der Adapterring hat hingegen einen größeren Außendurchmesser als der Flansch 19 und stellt damit eine vergrößerte Flanschfläche 8 bereit. Die Ringdichtung 3 liegt wiederum an der kreisförmig umlaufenden Stirnwand des Kameragehäuses 4, welche die Objektivaufnahmeöffnung 5 umgrenzt, an. Auf der diametral gegenüberliegenden Seite der Ringdichtung 3 liegt diese an der Flanschfläche 8 des Adapterrings 18 an. Der Adapterring 18 ist an einem Vorsprung des Objektivgehäuses 6 abgestützt, der beispielsweise wie dargestellt durch einen Flansch 19, d. h. einen Absatz zur Außendurchmesser-Vergrößerung, gebildet sein kann.

Die Frontlinse 9 hat eine plane Innenseite, die mit einem planen umlaufenden Randbereich 14 auf einer ebenso planen Auflagefläche 15 aufliegt. Diese plane Auflage kann verklebt sein, um die Frontlinse 9 wasserdicht und mechanisch fest an dem Objektivgehäuse 6 zu befestigen. Die Frontlinse 9 ist von einer umlaufenden Kragenwand 16 umgeben und damit mechanisch geschützt und bei der Montage in die gewünschte optisch zentrierte Lage geführt.

Die Frontlinse 9 kann zwischen ihrer umlaufenden, radial äußeren Stirnwand und der Kragenwand 16 mit einer Verklebung 17 wasserdicht und mechanisch fest an dem Objektivgehäuse 6 verbunden sein.

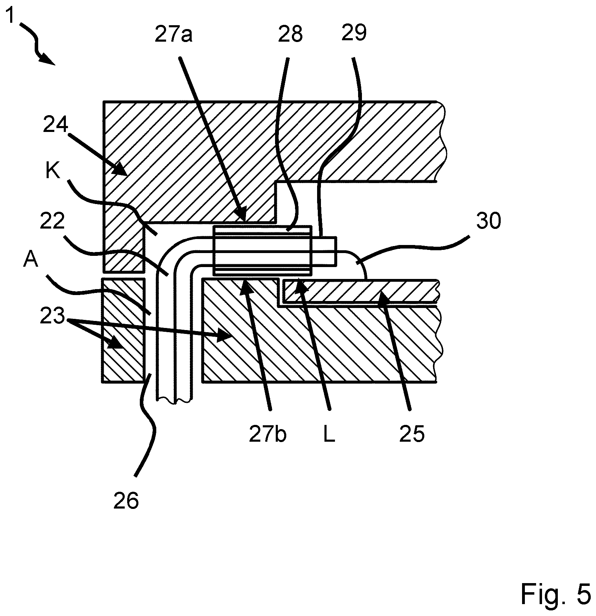

Figur 5 zeigt einen Ausschnitt eines Elektronikgerätes, beispielhaft in Form einer Kamera 1, in Seiten-Schnittansicht mit einem eingebauten Anschlusskabel 22.

Die Kamera 1 hat ein Gerätegehäuse, das aus einem Gehäuse-Unterteil 23 und einem darauf aufgesetzten und form- und/oder kraftschlüssig verbundenen Gehäuse-Oberteil 24 gebildet ist. In das Gehäuse-Unterteil 23 ist eine Elektronikleiterplatte 25 eingebaut. Diese Elektronikleiterplatte 25 kann in eine Vertiefung im Innenraum des Gehäuse-Unterteils 23 formschlüssig eingelegt und mit Befestigungsmitteln, wie bspw. Schrauben und/oder Rastelementen, an dem Gehäuse-Unterteil 23 befestigt sein.

Das Gehäuse-Unterteil 23 hat einen Kabeleinführungskanal 26, der mit einem Ausmündungsabschnitt zu einer Innenwand des aufgesetzten Gehäuse-Oberteils 24, die dem Gehäuse-Unterteil 23 zugewandt ist, ausmündet. Diese Innenwand des Gehäuse-Oberteils 24 bildet eine Klemmfläche 27a. Es ist ein Klemmzwischenraum K zwischen der Innenwand des aufgesetzten Gehäuse-Oberteils 24 bzw. seiner Klemmfläche 27a und einer dieser Klemmfläche 27a des Gehäuse-Oberteils 24 zugewandten Klemmfläche 27b des Gehäuse-Unterteils 23 vorhanden.

Diese Klemmflächen 27a, 27b spannen jeweils eine Ebene auf, die quer zur Längserstreckungsrichtung des Kabeleinführungskanals 26 ausgerichtet ist.

Die Klemmflächen 27a, 27b können mit einer Stufe in einen Aufnahmeraum übergehen, in dem die Elektronikleiterplatte 25 bzw. von der Elektronikleiterplatte 25 getragene Elektronikbauteile aufgenommen werden.

Es ist erkennbar, dass das elektrische Anschlusskabel 22 in den Ausmündungsbereich A des Kabeleinführungskanals 26 eingeführt und in dem Klemmzwischenraum K abgewinkelt ist. Der Winkel beträgt vorzugsweise etwa 90°. Eine Hülse 28 aus Metall, was elektrisch entsprechende leitende Legierungen und Kohlenstofffasern einschließt, ist auf den Endbereich des Kabels 22, der zwischen den Klemmflächen 27a, 27b und am Randbereich der Elektronikleiterplatte 25 positioniert ist, aufgecrimpt. Die Hülse 28 kann dabei an einem Schirmgeflecht des Kabels 22 anliegen und optional zusätzlich zu dem Crimp-Kraftschluss mit dem Außenleiter 29 verlötet werden. Das Schirmgeflecht bildet einen Außenleiter 9 des Kabels 22 für einen Masseanschluss. Die Hülse 28 ist mit einer Lötverbindung L auf einem Lötpad der Elektronikleiterplatte 25 aufgelötet.

Das Anschlusskabel 22 hat im Inneren mindestens ein Innenleiter 30, das jeweils mit einem Isolierstoffmantel ummantelt und elektrisch leitend mit der Elektronikleiterplatte 25 verbunden ist. Das Anschlusskabel 22 kann beispielsweise, wie dargestellt, ein Koaxialkabel mit einem koaxialen Innenleiter 30 sein.

Die Metallhülse 28 kann beispielsweise ein umfangsseitig geschlossenes Rohr oder ein in Längsrichtung geschlitztes Rohr sein. Der Querschnitt kann kreisförmig oder mehreckig sein. Vorteilhaft ist es, wenn die Hülsen 28 zwei zueinander planparallele und voneinander beabstandete Wandabschnitte hat, die einander gegenüberliegen und an den Klemmflächen 27a, 27b anliegen. Diese beiden Wandabschnitte können beidseits jeweils mit einem gekrümmtem oder abgewinkelten Wandabschnitt verbunden sein. Die Metallhülse 28 kann beispielsweise einen sechseckigen Querschnitt haben.

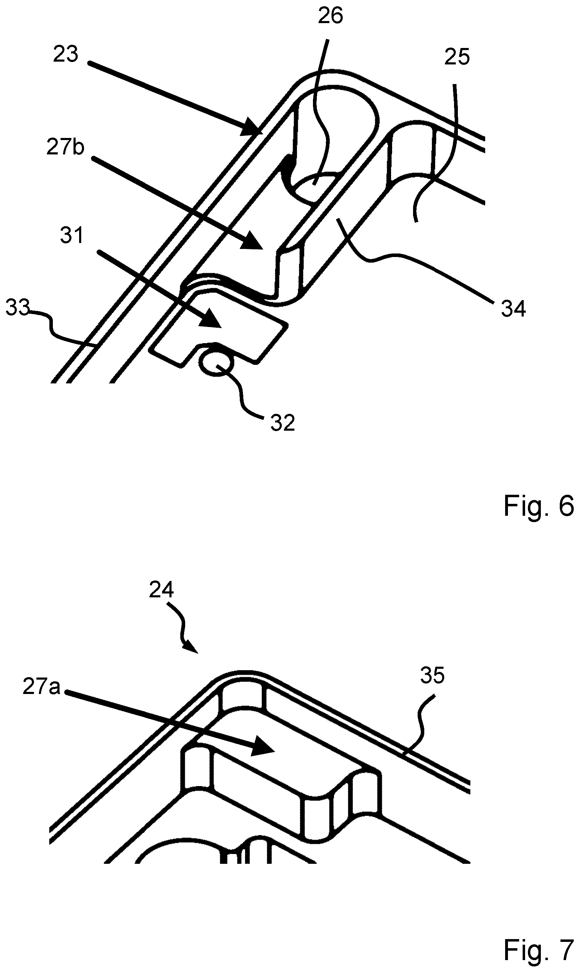

Figur 6 zeigt eine Ausschnittansicht der Innenseite eines Gehäuse-Unterteils 23.

Es ist erkennbar, dass die darin eingebaute Elektronikleiterplatte 25 eine an die Klemmfläche 27b angrenzende Lötfläche 31 (Lötpad) hat, auf welche die Hülse 28 aufgelötet wird. An die Lötfläche 31 grenzt ein Lötanschluss 32 an, der durch einen elektrisch isolierenden Spalt von der Lötfläche 31 beabstandet ist. Der Lötanschluss 32 kann beispielsweise eine Bohrung mit einer die Bohrung umgebenden Lötanschlussfläche an der nicht dargestellten Unterseite der Elektronikleiterplatte 25 und/oder der in der Figur 6 sichtbaren Oberseite der Elektronikleiterplatte 25 sein. Denkbar ist aber auch, dass anstelle des Lötanschlusses 32 ein Steckkontaktanschluss vorhanden ist, wie bspw. ein in die Elektronikleiterplatte 25 eingelöteter Kontaktstift, auf den eine Kontaktbuchse aufgesteckt wird.

Die Kontaktfläche 27b und der Kabeleinführungskanal 26 grenzen an eine Seitenwand 33 des Gehäuse-Unterteils 23 an. Die Seitenwand 33 bildet im Bereich der Klemmfläche 27b eine seitliche Begrenzungswand zum Führen und zugfesten Halten des eingeführten Kabels 22. In entsprechender Weise grenzt eine Innenseitenwand 34 an die Klemmfläche 27b an. Die Innenseitenwand 34 befindet sich zwischen der Elektronikleiterplatte 25 und der Klemmfläche 27b.

Figur 7 zeigt eine Ausschnittansicht der Innenseite eines Gehäuse-Oberteils 24. Es ist erkennbar, dass das Gehäuse-Oberteil 24 eine äußere Seitenwand 35 hat, die unmittelbar an die im Eckbereich angeordnete Klemmfläche 27a angrenzt.

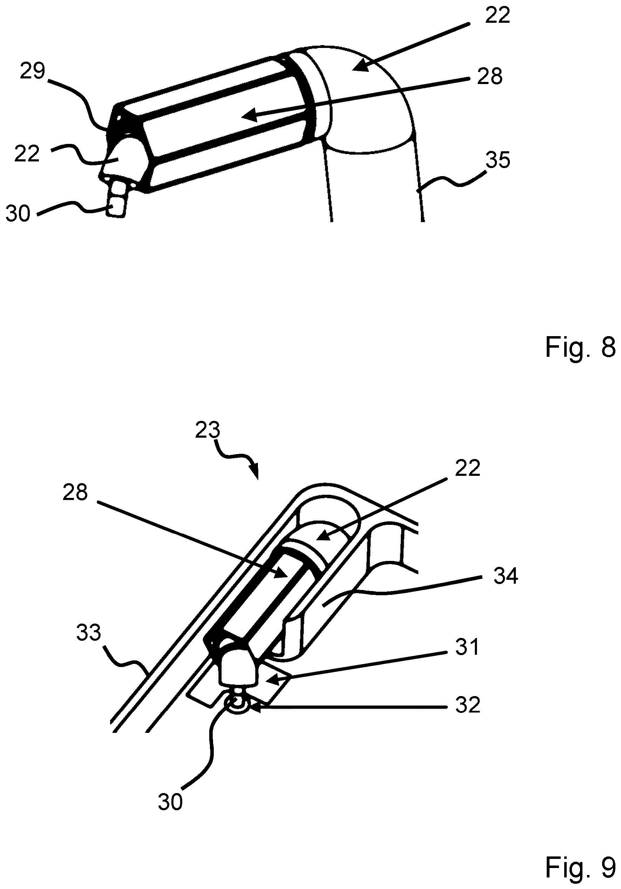

Figur 8 zeigt eine perspektivische Ansicht eines Kabels 22 mit aufgecrimpter Hülse 28.

Das Anschlusskabel hat einen Außenmantel 35 sowie einen den Innenleiter 30 umgebenden Innenmantel 36. Der Außenmantel 35 des Kabels 28 ist im vorderen Endbereich abisoliert, so dass nur der Innenleiter 30 mit seinem Innenmantel 36 und ein am Außenumfang des Innenmantels 36 angeordneter Außenleiter 29 verbleibt. Auf diesen derart abisolierten Endbereich des Kabels 22 ist die Metallhülse 28 aufgeschoben und durch Verpressen radial nach Innen zum Innenleiter 30 hin vercrimpt. Dies führt zu einer elektrisch leitenden Crimpverbindung der Innenfläche der Hülse 28 mit dem Außenleiter 29. Diese Crimpverbindung kann auch zusätzlich mit dem Außenleiter 29 verlötet werden.

Die Hülse 28 kann einen Durchmesser haben, der dem Außendurchmesser des Außenmantels 35 entspricht oder bevorzugt etwas kleiner als der Außendurchmesser des Außenmantels 35 ist. Damit kann das Anschlusskabel 28 bereits mit angecrimpter Hülse 28 vorkonfiguriert sein, bevor es von der Außenseite des Geräte-Unterteils 23 in den Kabeleinführungskanal 26 eingeführt wird.

Figur 9 zeigt eine Ausschnittansicht der Innenseite eines Gehäuse-Unterteils 23 aus Figur 6 mit eingebautem Anschlusskabel 22.

Es ist erkennbar, dass das Anschlusskabel 22 nach seinem Austritt aus dem Ausmündungsabschnitt um 90° umgebogen ist und zwischen den Seitenwänden 33, 34 und auf der Klemmfläche 27b formschlüssig gehalten wird. Damit wird das Anschlusskabel 22 zugfest an dem Gehäuse-Unterteil 23 befestigt.

### Bezugszeichenliste

| | | | |
|---|---|---|---|
| 1 | Kamera | 22 | Anschlusskabel |
| 2 | Objektiv | 23 | Gehäuse-Unterteil |
| 3 | Ringdichtung | 24 | Gehäuse-Oberteil |
| 4 | Kameragehäuse | 25 | Elektronikleiterplatte |
| 5 | Objektivaufnahmeöffnung | 26 | Kabeleinführungskanal |
| 6 | Objektivgehäuse | 27a, 27b | Klemmfläche |
| 7 | Objektivanschluss | 28 | Hülse |
| 8 | Flanschfläche | 29 | Außenleiter |
| 9 | Frontlinse | 30 | Innenleiter |
| 10 | Umfangsseitenwand | 31 | Lötfläche (Lötpad) |
| 11 | elektrische Leitung | 32 | Lötanschluss |
| 12 | Außengewinde | 33 | Seitenwand |
| 13 | Innengewinde | 34 | Innenseitenwand |
| 14 | umlaufender Randbereich | 35 | äußere Seitenwand |
| 15 | Auflagefläche | | |
| 16 | Kragenwand | A | Ausmündungsbereich |
| 17 | Verklebung | K | Klemmzwischenraum |
| 18 | Adapterring | L | Lötverbindung |
| 19 | Flansch | | |

## Patentansprüche

1. Kamera (1) mit einem Kameragehäuse (4) und einem mit dem Kameragehäuse (4) verschraubbaren Objektiv (2), wobei das Objektiv (2) ein zylinderförmiges Objektivgehäuse (6) mit einem Objektivanschluss (7) zur Verschraubung mit dem Kameragehäuse (4) und eine Frontlinse (9) in dem Objektivgehäuse (6) aufweist, **dadurch gekennzeichnet, dass** der Objektivanschluss (7) eine dem Kameragehäuse (4) zugewandte, umlaufende Flanschfläche (8) und eine auf dem Objektivanschluss (7) zwischen Kameragehäuse (4) und Flanschfläche (8) angeordnete Ringdichtung (3) hat, wobei die Ringdichtung (3) in einem einstellbaren Fokusbereich der Kamera (1) elastisch verformbar ist und bei mit der Kamera (1) verschraubtem Objektiv (2) im Fokusbereich komprimiert ist, und dass die Frontlinse (9) eine dem Objektivanschluss (7) zugewandte plane Oberfläche hat und dicht mit dem Objektivgehäuse (6) verbunden ist.

2. Kamera (1) nach Anspruch 1, **dadurch gekennzeichnet, dass** die Ringdichtung (3) eine im Querschnitt rechteckige, runde oder ovale Form hat.

3. Kamera (1) nach Anspruch 1 oder 2, **dadurch gekennzeichnet, dass** die Ringdichtung (3) eine Gummidichtung oder Silikondichtung ist.

4. Kamera (1) nach einem der Ansprüche 1- bis 3, **dadurch gekennzeichnet, dass** der umlaufende Randbereich (14) der Frontlinse (9) wasserdicht mit dem Objektivgehäuse (6) verklebt ist.

5. Kamera (1) nach einem der vorhergehenden Ansprüche, **dadurch gekennzeichnet, dass** der Objektivanschluss (7) des Objektivgehäuses (6) einen zylinderförmigen Schraubanschluss mit einem Außengewinde (12) und einen sich an den Schraubanschluss anschließenden Flansch (19) hat, wobei das Außengewinde (12) einen ersten Durchmesser und der Flansch (19) einen zweiten Außendurchmesser hat, der größer als der erste Durchmesser ist.

6. Kamera (1) nach einem der Ansprüche 1 bis 4, **dadurch gekennzeichnet, dass** der Objektivanschluss (7) des Objektivgehäuses (6) einen Flansch (19) mit einem Bajonettanschluss zur Verschraubung des Objektivs (2) mit der Kamera (1) über einen Bajonettverschluss hat, wobei die Ringdichtung (3) radial innenliegend zum Bajonettanschluss oder radial außenliegend zum Bajonettanschluss an dem Objektivanschluss (7) angeordnet ist.

7. Kamera (1) nach einem der vorhergehenden Ansprüche, **dadurch gekennzeichnet, dass** das Objektivgehäuse (6) eine ringförmig umlaufende plane Auflagefläche (15) zur Auflage des planen Randbereichs (14) der Frontlinse (9) hat.

8. Kamera (1) nach einem der vorhergehenden Ansprüche, **dadurch gekennzeichnet, dass** das Objektivgehäuse (6) eine die Frontlinse (9) am Außenumfang umfassende Umfangsseitenwand (10) hat.

9. Kamera (1) nach einem der vorhergehenden Ansprüche, **dadurch gekennzeichnet, dass** die umlaufende Flanschfläche (8) an einem Adapterring (18) ausgebildet ist, welcher an dem Objektivgehäuse (6) angeordnet ist.

10. Kamera (1) nach Anspruch 8, **dadurch gekennzeichnet, dass** der Adapterring (18) mit dem Objektivgehäuse (6) an einem umfangsseitig umlaufenden Verbindungsbereich wasserdicht verbunden ist.

11. Kamera (1) nach einem der vorhergehenden Ansprüche, **dadurch gekennzeichnet, dass** die Ringdichtung (3) kraftschlüssig und/oder formschlüssig mit dem Objektivgehäuse (6) verbunden ist.

12. Kamera (1) nach einem der vorhergehenden Ansprüche, wobei das Kameragehäuse (4) ein Gehäuse-Unterteil (3) und ein Gehäuse-Oberteil (4) und eine Elektronikleiterplatte (5) in dem Gehäuse-Unterteil (3) aufweist, wobei das Gehäuse-Oberteil (4) aus das Gehäuse-Unterteil (3) aufsetzbar und mit dem Gehäuse-Unterteil (3) miteinander verbindbar ist, das Gehäuse-Unterteil (3) einen zur Elektronikleiterplatte (5) hin führenden Kabeleinführungskanal (6) mit einem Anschlusskabel (2) hat, und das Anschlusskabel (2) in den Kabeleinführungskanal (6) eingeführt und mit der Elektronikleiterplatte (5) elektrisch leitend verbunden ist, **dadurch gekennzeichnet, dass** eine Hülse (8) auf den Umfang des abisolierten Endbereichs des Anschlusskabels (2) aufgecrimpt ist, und dass im verbundenen Zustand von Gehäuse-Oberteil (4) und Gehäuse-Unterteil (3) der Kabeleinführungskanal (6) mit einem Ausmündungsabschnitt (A) zu einer dem Gehäuse-Unterteil (3) zugewandten Innenwand des Gehäuse-Oberteils (4) hin ausmündet und sich an den Ausmündungsabschnitt (A) ein Klemmzwischenraum (K) anschließt, in dem die Hülse (8) mit einander zugewandten Klemmflächen (7a, 7b) des Gehäuse-Oberteils (4) und Gehäuse-Unterteils (3) eingeklemmt ist.

13. Kamera (1) nach Anspruch 12, **dadurch gekennzeichnet, dass** sich der Kabeleinführungskanal (6) von einer Außenseite des Gehäuse-Unterteils (3) zu der dem Gehäuse-Unterteil (3) zugewandten Innenwand des Gehäuse-Oberteils (4) hin erstreckt, wobei der Ausmündungsabschnitt (A) die gesamte Länge des Kabeleinführungskanals (6) bildet.

14. Kamera (1) nach Anspruch 12 oder 13, **dadurch gekennzeichnet, dass** die Klemmfläche (7a) des Gehäuse-Unterteils (3) eine Ebene aufspannt, die quer zur Längserstreckungsrichtung des Ausmündungsabschnitts (A) ausgerichtet ist.
